## Europäisches Patentamt
## European Patent Office
## Office européen des brevets

(19)

(11) Publication number: **0 018 148**
**B1**

(12) **EUROPEAN PATENT SPECIFICATION**

(45) Date of publication of patent specification: **04.05.83**

(51) Int. Cl.³: **F 16 J 3/02, F 16 K 17/16**

(21) Application number: **80301099.0**

(22) Date of filing: **03.04.80**

(54) Improvements in and relating to rupture disc assemblies.

(30) Priority: **11.04.79 GB 7912746**
**15.11.79 GB 7939554**

(43) Date of publication of application:
**29.10.80 Bulletin 80/22**

(45) Publication of the grant of the patent:
**04.05.83 Bulletin 83/18**

(84) Designated Contracting States:
**DE FR GB**

(56) References cited:
**DE - A - 2 656 832**
**DE - B - 2 056 609**
**FR - A - 2 359 454**
**GB - A - 1 338 747**
**GB - A - 1 360 415**

(73) Proprietor: **ELECTROFABRICATION &**
**ENGINEERING COMPANY LIMITED**
**Gloucester Road West Chirton Industrial Estate**
**North Shields Tyne & Wear, NE29 8RQ (GB)**

(72) Inventor: **Carbin, Derek Charles**
**100 Queens Road**
**Whitley Bay Tyne & Wear (GB)**
Inventor: **Bush, Michael Edward**
**7 Melbourne Crescent**
**Whitley Bay Tyne & Wear (GB)**
Inventor: **Balfour, Ian David**
**29 Whernside Place**
**Cramlington Northumberland (GB)**

(74) Representative: **Gura, Henry Alan et al,**
**MEWBURN ELLIS & CO. 2/3 Cursitor Street**
**London EC4A 1BQ (GB)**

Courier Press, Leamington Spa, England.

Improvements in and relating to rupture disc assemblies

Technical field

This invention relates to rupture disc assemblies for use as safety relief devices on pressurised systems such as pressure vessels.

Background art

It is common practice, and has been for some time, to provide such rupture disc assemblies incorporating resin-impregnated graphite discs as the rupturing elements, the consistency in the mechanical properties of the frangible graphite and the economy of manufacture of such discs making them commercially viable.

However, the established arrangements have certain disadvantages. In one known arrangement, an assembly includes an accurately-machined, flat disc of resin-impregnated graphite located in a holder member comprising opposed inlet and outlet supporting portions, with the interposition of sealing gasket(s) where necessary, the disc and holder member being connected into a pressure system or vessel by being clamped between, for example, inlet and outlet pipe flanges. If the flange bolts are overtorqued or torqued unevenly, or if the clamping surfaces are misaligned, there is a strong tendency for the graphite disc to crack because of the excessive or uneven forces acting thereon.

An alternative known arrangement utilises a single block of graphite comprising a cylinder of resin-impregnated graphite of substantial depth compared with the thickness of normal graphite discs, said cylinder being accurately and centrally recessed from one end face thereof to provide an integral rupture membrane at the other end thereof. Such a unit can be bolted directly between inlet and outlet pipe flanges in a pressurised system without the requirement for a separate holder member. However there is still a tendency for the graphite to crack when subjected to the above-detailed excessive or uneven forces, while the recessed cylindrical block has the additional disadvantage, particularly at high pressures, of being susceptible to sideways rupture through the annular wall thereof.

The invention as claimed is intended to overcome these disadvantages.

Disclosure of the invention

According to the present invention there is provided a rupture disc assembly comprising an annular holder member of a substantially incompressible material for location on a pressurised system to be monitored and a rupture disc member including a disc portion of a frangible material, characterised in that one end face of said holder member is recessed to provide therein a seating for said rupture disc member such that the outer face of the disc portion of said rupture disc member is substantially co-planar with said one end face of the holder member.

Such an arrangement ensures that, if the assembly is subjected to excessive or uneven loading, any tendency for the assembly to deform is resisted by the material of the holder member which can withstand the forces thereon, thereby protecting the disc portion of the rupture disc member from possible distoration, cracking or the like. Further, the provision of a holder member of a rigid, non-deformable material eliminates the possibility of sideways blow-out.

The assembly may further comprise an annular spacer member seating in the recessed holder member to locate the rupture disc member within said holder member with the outer face of the disc portion thereof substantially co-planar with said end face of the holder member.

The spacer member may be of a substantially incompressible material and may be located to constitute an axial extension, from the inner face of the disc portion, of the annular outer regions of said disc portion, or, alternatively may comprise a ring of substantially the same thickness as the disc portion and surrounding said disc portion to form a radial extension thereof.

In a further embodiment, the rupture disc member includes, integrally formed with the disc portion, a further portion of said frangible material forming an axial extension, from the inner face of the disc portion, of the annular outermost region of said disc portion, said further portion of the rupture disc member comprising said spacer member.

The material of the disc portion is conveniently graphite, preferably resin-impregnated graphite, although other frangible materials such as glass or ceramics may be used.

The holder member is conveniently of metal or metal alloy, for example zinc-plated carbon steel, although non-metallic materials having the necessary resistance to deformation may be used.

The preferred assembly further comprises inlet and outlet sealing gaskets which may be secured, for example by an adhesive, to the end faces of the holder member.

The assembly may be provided with identification means including a tag portion extending substantially radially outwardly from the assembly and on which is stamped or otherwise marked operative details of the assembly.

Conveniently the tag portion is integrally formed with or attached to the above-mentioned ring-shaped spacer member.

The rupture disc assembly may be clamped directly between annular inlet and outlet flanges of the pressurised system to be monitored, or may be located in or form part of a further holder member itself clamped between said inlet and outlet flanges.

Brief description of the drawings.

Figure 1 shows, diassembled, a holder member and a rupture disc member of an assembly according to the invention;

Figure 2 shows an assembly according to the invention;

Figure 3 shows the assembly of Figure 2 in position between inlet and outlet flanges of a pressurised system;

Figures 4, 5 and 6 show three further assemblies according to the invention, and

Figure 7 is a plan view from above of an assembly according to the invention which is a modification of that shown in Figure 5 and including identification means.

Best modes of carrying out the invention

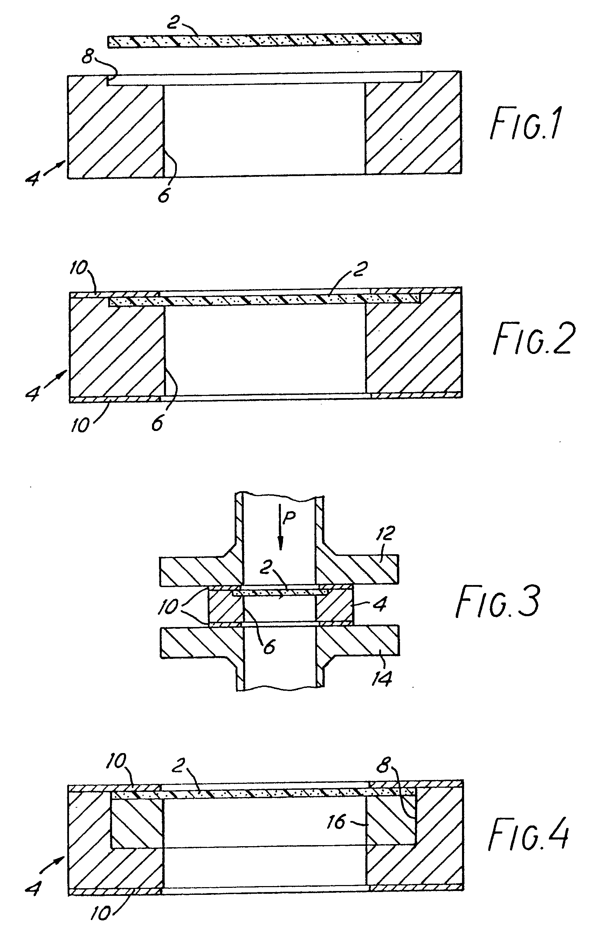

Referring to Figures 1 to 3 of the drawings, the illustrated assembly includes a rupture disc member in the form of a flat disc 2 of resin-impregnated graphite, and an annular holder member indicated generally at 4. The bore 6 through the member corresponds in diameter with that of the bore to be monitored, while an end face of the holder member is accurately recessed at 8 to receive therein the disc 2 so that the upper or outer surface of said disc is substantially co-planar with said end face of the holder member 4.

The assembly is completed by a pair of gaskets 10 one to each end of the holder member 4, said gaskets being secured, preferably by an adhesive, to the holder member 4 to retain the disc 2 within said member 4 and to provide an easily handleable unit as shown in Figure 2.

The holder member 4 is made from a material that is substantially incompressible when subjected to the clamping pressures involved and as will be explained in more detail below, which material is conveniently a metal such as carbon steel suitably protected against corrosion by, for example, zinc plating. However other metals, metal alloys or non-metallic materials incorporating the necessary resistance to deformation may be used.

In use, the assembled unit is positioned between inlet and outlet pipe flanges 12, 14 respectively of a pressurised system, said flanges being bolted together to locate the assembly in its operative position with the bore 6 of the holder member 4 forming a continuation of the pipe flange bores and with fluid pressure being applied, in the direction of arrow P, to that part of the disc within the bore as seen in Figure 3.

It will be appreciated that, on bolting the pipe flanges together, the major portion of the clamping pressure is exerted, through the sealing gaskets 10, on the end faces of the holder member 4, while pressurised sealing contact is also made with the radially outer annular region of the disc 2 the outer or upper surface of which is substantially co-planar with that of the upper end face of the holder member 4. However, any excess loading of the bolts is resisted by the substantially non-deformable nature of the material of the holder member and is not transmitted to the frangible disc 2 itself.

When positioned in the recess 8 in the holder member 4, the upper surface of the disc 2 may be slightly proud of the upper end face of the holder member 4 (by of the order of 0.025 mm) to ensure a good seal when the clamping pressure is applied thereto through the upper gasket 10. However said upper surface of the disc could be slightly below said upper end face of the holder member 4 if, on application of the clamping torque, the upper gasket 10 is sufficiently deformable to ensure a pressure-tight seal with the disc 2.

Although described in relation to a rupture member of resin-impregnated graphite, the assembly of the invention may include rupture members of other frangible materials such as glass or ceramics.

The provision of a holder member 4 of a rigid, non-deformable material eliminates the possibility of sideways blow-out, while the accurate machining of the recess 8 in the holder member 4 of Figures 1 to 3 to suit a disc 2 of predetermined dimensions ensures that the upper surface of the disc 2 and the upper end face of the holder member 4 are maintained level to close tolerances, typically 0.025 mm inches, thereby ensuring a pressure seal between the disc 2 and the holder member 4.

Referring to Figure 4, the holder member 4 includes a recess 8 the diameter of which corresponds with that of the disc 2 to be received therein but the depth of which is substantially greater than the thickness of the disc 2. An annular spacer member 16 of a substantially incompressible material, for example stainless steel, is located in the recess as shown so that the inner face thereof provides a continuation of the inner face of the non-recessed part of the holder member 4 and so that the upper end face of said spacer member 16 provides an accurately positioned seating for the disc 2 whereby the outer face of said disc is substantially co-planar with the recessed end face of the holder member 4.

The disc 2 may or may not be bonded to the spacer member 16, while inlet and outlet sealing gaskets 10, as in the embodiment of Figures 1 to 3, may or may not be bonded to the holder member 4 and disc 2.

It will be appreciated that the provision of a spacer member 16 as shown in Figure 4 enables discs 2 of different thickness to be received in the same holder member 4 whilst still maintaining the outer face of such discs substantially co-planar with the recessed end faces of the holder member 4. It is merely necessary to provide a spacer member 16 of a depth such that the upper end face thereof provides a seating located at the desired position in the holder member 4 dependent upon the thickness of the disc to be used therewith.

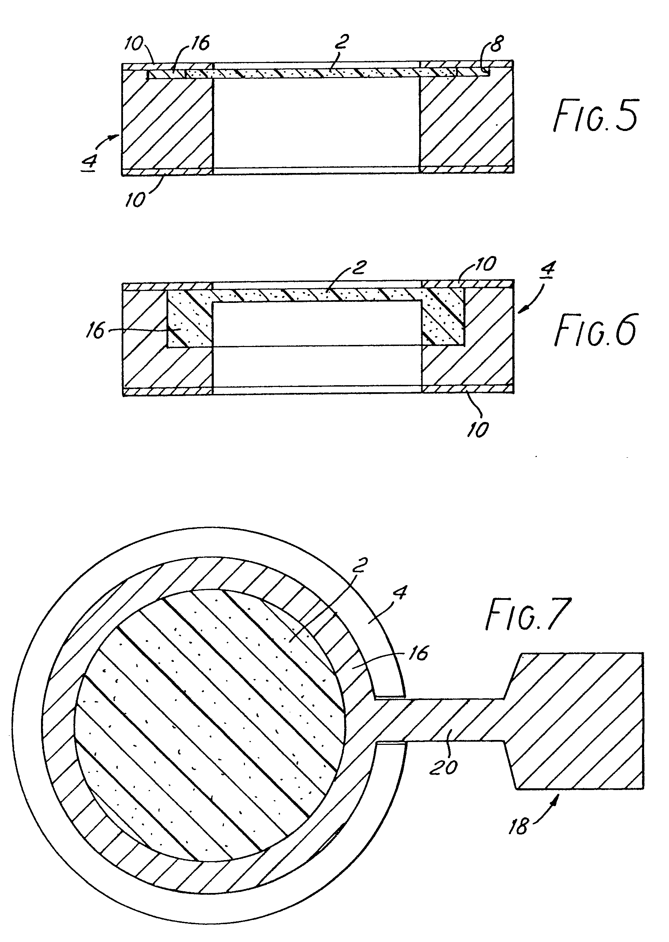

Figure 5 illustrates an arrangement similar to that of Figure 2 except that an annular spacer member 16 of a substantially incompressible material and of thickness substantially equal to that of the disc 2 surrounds said disc to form a radial extension thereof. The recess 8 in the holder member 4 is suitably dimensioned to receive the combination of disc 2 and spacer member 16, which components may or may not be bonded to one another. Inlet and outlet sealing gaskets 10 again complete the assembly.

In the embodiment of Figure 5, the major portion of the clamping load when the assembly is located between inlet and outlet pipe flanges is exerted, through the gaskets 10, on the holder member 4 and spacer member 16 both of which are of a rigid, non-deformable material capable of withstanding the forces involved.

Referring to Figure 6 there is shown an embodiment similar in appearance to that of Figure 4, but the spacer member 16 is integrally formed with the disc 2 to form part of the rupture disc member itself and is of the frangible material of said disc 2, preferably resin-impregnated graphite.

As an alternative to this arrangement an annular spacer member 16 separate from the disc 2 may be provided in accordance with Figure 4, but of a frangible material such as resin impregnated graphite. Such a spacer member may or may not be bonded to the disc 2.

All the described assemblies may be clamped directly between inlet and outlet pipe flanges such as those shown at 12, 14 in Figure 3 or may themselves be located in, or form part of, further holder members prior to being clamped in the system to be monitored. In all cases, however, the major portion of any clamping load is taken by the substantially incompressible material of the holder member 4 or, in the embodiment of Figure 5, by said holder member 4 and spacer member 16.

It is preferable for rupture disc assemblies to include means thereon for identifying the characteristics of the assembly in question when said assembly is in position in the system to be monitored. This is readily achieved with metal discs which can be provided with tags integrally formed therewith or attached thereto and extending radially outwardly therefrom.

However the attachment of such tags to graphite discs is not so readily achieved.

The incorporation in the described assemblies of metal parts, however, enables the attachment thereto of identification tags. For example such tags may be fixed to, or formed as part of, the holder member 4 to project outwardly from the assembly. Alternatively, an additional component to the assembly may be provided in the form of an annulus, preferably metal, bonded to the face of the inlet sealing gasket 10 remote from the disc 2 and including a tag portion projecting radially outwardly therefrom for identification purposes. The inlet sealing gasket 10 may, in turn, be bonded to the disc 2.

The embodiment of Figure 5 provides a particularly convenient means of incorporating an identification tag and this is illustrated in Figure 7. Referring to Figure 7, the annular spacer member 16 is shown surrounding, to form a radial extension of, the disc 2, said spacer member 16 being formed of an incompressible metal. Integrally formed with the spacer member 16 is a tag portion 18 which extends radially outwardly from the spacer member 16 and from the assembly as a whole. A groove in the upper surface of the holder member 4 accommodates a reduced-thickness arm portion 20 of the tag portion 18. Clearly, the characteristics of the rupture disc member/assembly can be stamped or otherwise marked on the tag portion 18.

For ease of handling it is preferable for at least the disc 2, inlet sealing gasket 10 and spacer member 16 and identification means if present to be secured together to form a single, readily handleable component for easy insertion into an associated holder member 4.

## Claims

1. A rupture disc assembly comprising an annular holder member (4) of a substantially incompressible material for location on a pressurised system to be monitored and a rupture disc member including a disc portion (2) of a frangible material, characterised in that one end face of said holder member (4) is recessed (8) to provide therein a seating to said rupture disc member such that the outer face of the disc portion of said rupture disc member is substantially co-planar with said one end face of the holder member (4).

2. A rupture disc assembly as claimed in claim 1 and further comprising an annular spacer member (16) seating in the recessed holder member (4) to locate the rupture disc member within said holder member with the outer face of the disc portion (2) thereof substantially co-planar with said one end of the holder member (4).

3. A rupture disc assembly as claimed in claim 3 in which the spacer member (16) is located to constitute an axial extension, from the inner face of the disc portion (2), of the annular outermost region of said disc portion.

4. A rupture disc assembly as claimed in claim 3 in which the spacer member (16) is of a substantially incompressible material.

5. A rupture disc assembly as claimed in claim 3 in which the rupture disc member includes, integrally formed with the disc portion (2), a further portion (16) of said frangible material forming an axial extension, from the inner face of the disc portion (2), of the annular outermost region of said disc portion (2), said further portion (16) of the rupture disc member comprising said spacer member.

6. A rupture disc assembly as claimed in claim 2 in which the spacer member (16) comprises a ring of substantially incompressible material of substantially the same thickness as the disc portion (2) and surrounding said disc portion (2) to form a radial extension thereof.

7. A rupture disc assembly as claimed in any one of claims 2, 3, 4 or 6 in which the spacer member (16) is bonded to the disc portion (2).

8. A rupture disc assembly as claimed in any one of claims 1 to 7 in which the frangible material is resin-impregnated graphite.

9. A rupture disc assembly as claimed in any one of claims 1 to 8 in which the substantially incompressible material is zinc-plated carbon steel.

10. A rupture disc assembly as claimed in any one of claims 1 to 9 and further comprising inlet and outlet sealing gaskets (10) one to each end of, and secured to, the holder member (4).

11. A rupture disc assembly as claimed in any one of claims 1 to 10 and further comprising identification means including a tag portion (18) extending substantially radially outwardly of the assembly and carrying operative details of the assembly.

12. A rupture disc assembly as claimed in claim 11 together with claim 6 in which the tap portion (18) is integrally formed with or attached to said ring (16) of substantially incompressible material.

## Patentansprüche

1. Zerreißscheibenanordnung mit einem ringförmigen Halterungskörper aus einem im wesentlichen inkompressiblen Material zur Anbringung an einem zu überwachenden, unter Druck stehenden System und einem einen Scheibenbereich (2) aus brechbarem Material aufweisenden Zerreißscheibenkörper, dadurch gekennzeichnet, daß eine endseitige Stirnfläche des Halterungskörpers (4) mit einer Ausnehmung (8) versehen ist, um darin einen derartigen Sitz für den Zerreißscheibenkörper zu bilden, daß die äußere Stirnseite des Scheibenbereichs des Zerreißscheibenkörpers im wesentlichen mit dieser einen endseitigen Stirnseite des Halterungskörpers (4) koplanar ist.

2. Zerreißscheibenanordnung nach Anspruch 1, die ferner einen in dem ausgenommenen Halterungskörper (4) eingepaßten ringförmigen Abstandskörper (16) aufweist, um den Zerreißscheibenkörper innerhalb des Halterungskörpers mit der äußeren Stirnseite seines Scheibenbereichs (2) im wesentlichen koplanar zu diesem einen Ende des Halterungskörpers (4) in Lage zu bringen.

3. Zerreißscheibenanordnung nach Anspruch 2, bei der der Abstandskörper (16) zur Bildung eines von der inneren Stirnseite des Scheibenbereichs (2) ausgehenden axialen Fortsatzes des ringförmigen äußersten Bereichs des Scheibenbereichs angeordnet ist.

4. Zerreißscheibenanordung nach Anspruch 3, bei der der Abstandskörper (16) aus einem im wesentlichen inkompressiblen Material besteht.

5. Zerreißscheibenanordnung nach Anspruch 3, bei der der Zerreißscheibenkörper einen mit dem Scheibenbereich (2) einstückig ausgebildeten weiteren Bereich (16) aus dem zerbrechbaren Material aufweist, der einen von der inneren Stirnseite des Scheibenbereichs (2) ausgehenden axialen Fortsatz des ringförmigen äußersten Bereichs des Scheibenbereichs (2) bildet, wobei der weitere Bereich (16) des Zerreißscheibenkörpers den Abstandskörper aufweist.

6. Zerreißscheibenanordnung nach Anspruch 2, bei der der Abstandskörper (16) einen Ring aus einem im wesentlichen inkompressiblen Material von im wesentlichen derselben Dicke als der Scheibenbereich (2) aufweist, welcher den Scheibenbereich (2) zur Bildung eines radialen Fortsatzes hierzu umgibt.

7. Zerreißscheibenanordnung nach einem der Ansprüche 2, 3, 4 oder 6, bei der der Abstandskörper (16) an den Scheibenbereich (2) angeklebt ist.

8. Zerreißscheibenanordnung nach einem der Ansprüche 1 bis 7, bei der das zerbrechbar Material harzgetränkter Graphit ist.

9. Zerreißscheibenanordnung nach einem der Ansprüche 1 bis 8, bei der das im wesentlichen inkompressible Material verzinkter Kohlenstoffstahl ist.

10. Zerreißscheibenanordnung nach einem der Ansprüche 1 bis 9, die ferner an jedem Ende des Halterungskörpers (4) eine daran befestigte Einlaß- und Auslaß-Dichtungsscheibe (10) aufweist.

11. Zerreißscheibenanordnung nach einem der Ansprüche 1 bis 10, die ferner eine Kennungseinrichtung mit einem sich im wesentlichen radial aus der Anordnung heraus erstreckenden und Betreibsangaben der Anordnung tragenden Markierungsbereich (18) aufweist.

12. Zerreißscheibenanordnung nach Anspruch 11 in Verbindung mit Anspruch 6, bei der der Markierungsbereich (18) einstückig mit dem Ring (16) aus dem im wesentlichen inkompressiblen Material ausgebildet oder daran befestigt ist.

## Revendications

1. Un assemblage à disque de rupture comprenant un élément monture annulaire (4) et une matière substantiellement incompressible destiné à être monté sur un appareillage mis sous pression qu'il s'agit de surveiller et un élément disque de rupture comprenant une partie disque (2) en une matière fragile, caractérisé en ce qu'une base dudit élément monture (4) est évidée (8) pour y former un siège pour ledit élément disque de rupture de telle manière que la face externe de la partie disque dudit élément disque de rupture soit sensiblement co-planaire avec ladite base de l'élément monture (4).

2. Un assemblage à disque de rupture tel que revendiqué en revendication 1 et comprenant de plus un élément d'entretoise annulaire (16) ajusté dans ledit élément monture évidé (4) pour loger l'élément disque de rupture dans ledit élément monture avec la face externe de la partie disque (2) sensiblement coplanaire avec ladite base dudit élément monture (4).

3. Un assemblage à disque de rupture tel que revendiqué en revendication 2 dans lequel l'élément d'entretoise (16) est placé pour constituer un prolongement axial, en saillie sur la face interne de la partie disque (2), de la région annulaire la plus extérieure de ladite partie disque.

4. Un assemblage à disque de rupture tel que revendiqué en revendication 3 dans lequel l'élément d'entretoise (16) est en une matière substantiellement incompressible.

5. Un assemblage à disque de rupture tel que revendiqué en revendication 3 dans lequel l'élément disque de rupture comprend, conformée avec la partie disque (2), une autre partie (16) faite de ladite matière fragile constituant un prolongement axial, en saillie sur la face interne de la partie disque (2), de la région annulaire la plus extérieure de ladite partie disque (2), ladite autre partie (16) de l'élément disque de rupture comprenant ledit élément d'entretoise.

6. Un assemblage à disque de rupture tel que revendiqué en revendication 2 dans lequel l'élément d'entretoise (16) comprend un anneau fait d'une matière substantiellement incompressible sensiblement de la même épaisseur que la partie disque (2) et entourant ladite partie disque (2) pour former un prolongement radial de cette partie.

7. Un assemblage à disque de rupture tel que revendiqué dans l'une quelconque des revendications 2, 3, 4 ou 6, dans lequel l'élément d'entretoise (16) est solidaire de la partie disque (2).

8. Un assemblage à disque de rupture tel que revendiqué dans l'une quelconque des revendications 1 à 7 dans lequel la matière fragile est du graphite imprégné de résine.

9. Un assemblage à disque de rupture tel que revendiqué dans l'une quelconque des revendications 1 à 8 dans lequel la matière substantiellement incompressible est de l'acier au carbone zingué.

10. Un assemblage à disque de rupture tel que revendiqué dans l'une quelconque des revendications 1 à 9 et comprenant en outre des garnitures d'étanchéité d'entrée et de sortie (10), une à chaque extrêmité de, et fixée à, l'élément monture (4).

11. Un assemblage à disque de rupture tel que revendiqué dans l'une quelconque des revendications 1 à 10 et comprenant en outre des moyens d'identification comprenant une patte (18) s'étendant sensiblement radialement vers l'extérieur de l'assemblage et portant des détails de fonctionnement de l'assemblage.

12. Un assemblage à disque de rupture tel que revendiqué en revendication 11 combinée à la revendication 6 dans lequel la patte (18) est venue de matière avec ou est rendue solidaire dudit anneau (16) en matière substantiellement incompressible.

*FIG.1*

*FIG.2*

*FIG.3*

*FIG.4*

FIG.5

FIG.6

FIG.7